# EUROPEAN PATENT APPLICATION

(11) **EP 4 570 743 A1**
(43) Date of publication of application: **18.06.2025**
(21) Application number: 23217340.1
(22) Date of filing: 15.12.2023
(51) Int. Cl.: C01B 3/04, C01B 3/50, C01B 3/56

(54) **METHOD AND APPARATUS FOR SEPARATING RESIDUAL AMMONIA AND WATER FROM CRACKED AMMONIA**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: TRANIER, Jean-Pierre, 78350 Jouy-en-Josas (FR); FUENTES, François, 94503 Champigny-sur-Marne (FR)
(74) Representative: Air Liquide

(57) **Abstract**

A method for producing hydrogen using a feed stream comprising ammonia is provided. The method may include the steps of: cracking a gaseous ammonia feed comprising ammonia and at least 0.15% water vapor in an ammonia cracker to produce a cracked gas stream comprising hydrogen, nitrogen, unreacted ammonia, and water vapor; cooling the cracked gas stream to a separation temperature that is sufficient for condensing at least a portion of the unreacted ammonia and the water vapor to form a dual phase fluid; separating the dual phase fluid in a separator that is configured to produce an aqueous ammonia stream and a vapor stream, the vapor stream comprising predominantly of hydrogen and nitrogen; wherein the separation temperature is below 0°C.

## Description

### Technical Field of the Invention

The present invention relates to a method for hydrogen production using non-hydrocarbon feedstocks. More specifically, embodiments of the present invention are related to using ammonia as a feedstock in a hydrogen production facility in lieu of hydrocarbons, particularly natural gas, with subsequent capturing, treating, and then recycling of non-reacted ammonia for further processing.

### Background of the Invention

In an effort to reduce the effects of carbon dioxide emissions, new energy carriers are becoming increasingly important. One of the leading energy carriers is hydrogen; however, due to its small molecular size, high pressure requirements, and very low boiling point, transportation of elemental hydrogen is difficult and costly.

Ammonia (NH₃) has raised some attention in the literature, since existing infrastructure can be used for storage and transportation (e.g., LPG infrastructure). As such, production of hydrogen using ammonia, instead of natural gas, is foreseen to play a major role in the future of hydrogen as a key molecule in the low carbon energy transition.

Liquid ammonia could be an important source for hydrogen production or an important energy carrier, especially for electricity generation in regions with little or no fuel sources. As an energy carrier, liquid ammonia can also serve as a source to balance fluctuating electricity generation by renewable energy technologies such as wind, solar and hydro. The advantage of ammonia as an energy carrier is that liquid ammonia is easier to transport and store than gaseous or liquid hydrogen.

WO2022/243410 proposes 2 options to remove ammonia and water from the gas mixture either in the pressure swing adsorption unit together with the nitrogen removal or in a dedicated scrubbing step. None of these 2 options is very convenient. As mentioned in this patent, it is preferable to perform ammonia cracking at a temperature between 550°C and 600°C. At such temperature, the amount of unconverted ammonia could be several percent (e.g., around 3%). The first option would significantly increase the size of the pressure swing adsorption unit and/or reduce the hydrogen recovery. The second option would generate a water/ammonia mixture that cannot be released in the environment. Therefore, it is required to provide additional systems to separate ammonia from water.

Therefore, it would be advantageous to provide a solution that can allow for efficient production of hydrogen from an ammonia feed gas without suffering from the aforementioned disadvantages.

### Summary of the Invention

The present invention is directed to an apparatus and process that satisfies at least one of these needs. In certain embodiments of the invention, an ammonia feed gas can be cracked to form hydrogen, and then the unreacted NH₃ is separated from an offgas downstream of the cracker, before the recovered ammonia is recycled for use as either fuel or feedstock.

In certain embodiments of the present invention, the method can include separating ammonia and water from a gas mixture mainly containing hydrogen and nitrogen derived from an ammonia cracking unit by partial condensation at a temperature below the freezing point of pure water (i.e., below 0°C), preferably below -40°C, or more preferably at a temperature around -77°C (i.e., close to the freezing point of pure ammonia).

In another embodiment, the invention to provide a system where unconverted ammonia may be recovered and recycled upstream of the ammonia cracking unit.

In one embodiment, a method for producing hydrogen using a feed stream comprising ammonia is provided. The method may include the steps of: cracking a gaseous ammonia feed comprising ammonia and at least 0.15% water vapor in an ammonia cracker to produce a cracked gas stream comprising hydrogen, nitrogen, unreacted ammonia, and water vapor; cooling the cracked gas stream to a separation temperature that is sufficient for condensing at least a portion of the unreacted ammonia and the water vapor to form a dual phase fluid; separating the dual phase fluid in a separator that is configured to produce an aqueous ammonia stream and a vapor stream, the vapor stream comprising predominantly of hydrogen and nitrogen; wherein the separation temperature is below 0°C.

In alternate embodiments of the method for producing hydrogen: the separation temperature is between -40°C and -100°C, and the method can further include the step of using the aqueous ammonia stream as fuel to provide heat used in step (a).

In another embodiment, the method for producing hydrogen using a feed stream comprising ammonia can include the steps of: pre-cooling a cracked gas stream, which is comprised of hydrogen, nitrogen, unreacted ammonia, and water vapor, to a pre-cooling temperature that is sufficient for condensing at least a portion of the unreacted ammonia and the water vapor to form a first dual phase fluid; separating the first dual phase fluid in a first separator that is configured to produce an aqueous ammonia stream and a vapor stream; cooling the vapor stream to a separation temperature that is sufficient for condensing at least a portion of the unreacted ammonia and the water vapor to form a second dual phase fluid; and separating the second dual phase fluid in an ammonia separator to produce a waste stream and a fluid stream, wherein the fluid stream comprises predominately of hydrogen and nitrogen, wherein the waste stream comprises ammonia and water, wherein the pre-cooling temperature is above 0°C and the separation temperature is below 0°C.

In optional embodiments of the method of the invention:
- the method can include the step of cracking a gaseous ammonia feed comprising ammonia and at least 0.15% water vapor in an ammonia cracker to produce the cracked gas stream;
- the method can include the step of using the aqueous ammonia stream as fuel to provide heat used in the step of cracking the gaseous ammonia feed;
- the method can include the step of combining the waste stream with the gaseous ammonia feed;
- the method can include sending the fluid stream from step (d) to a hydrogen separation unit to form a hydrogen stream and a nitrogen enriched stream;
- the hydrogen separation unit comprises a pressure swing adsorption unit;
- the hydrogen separation unit comprises a temperature swing adsorption unit;
- the hydrogen separation unit comprises a cryogenic partial condensation unit that is configured to operate at a temperature below a boiling point of nitrogen, such that the nitrogen is separated from the hydrogen via condensation;
- the method can include warming a liquid ammonia feed stream to produce the gaseous ammonia feed;
- the pre-cooling and/or cooling steps use refrigeration from a stream selected from the group consisting of the liquid ammonia feed stream, the fluid stream, a stream derived from the fluid stream, a refrigerant, and combinations thereof;
- the separation temperature is between -40°C and -100°C;
- the pressure of the cracked gas stream is between 10 and 50 bar(a);
- the pressure of the cracked gas stream is between 25 and 35 bar(a);
- the cracked gas stream is at a temperature between ambient and 150°C;
- the cracked gas stream is pre-cooled in a cooling unit selected from the group consisting of a water cooler, an atmospheric cooler, or refrigerant cooler; and/or
- the method can include the step of determining the water vapor and/or unreacted ammonia content of the cracked gas stream and adjusting the ammonia content to ensure the cracked gas feed will not freeze during step (c).

In another embodiment, the method for producing hydrogen using a feed stream comprising ammonia can include the steps of: providing the gas mixture, wherein the gas mixture comprises hydrogen, nitrogen, unreacted ammonia, and water vapor; removing heat from the gas mixture such that the gas mixture is partially condensed to form a two-phase stream; separating the two-phase stream to produce a liquid phase and a gaseous phase, wherein the liquid phase is enriched with ammonia and water, wherein the gaseous phase is enriched in hydrogen and nitrogen, wherein the two-phase stream is at a temperature below 0°C, preferably below -40°C, more preferably at a temperature around -77°C.

In optional embodiments of the method of the invention: the step of removing heat from the gas mixture is done in the following two steps: at a first temperature above 0°C to produce a first ammonia and water enriched liquid fraction and a first ammonia and water depleted gaseous fraction; and at a second temperature below 0°C.

In another embodiment, an apparatus for producing hydrogen from a gas mixture derived from an ammonia cracking unit and comprises hydrogen, nitrogen, unreacted ammonia, and water vapor is provided. In this embodiment, the apparatus can include: a first cooler configured to cool the gas mixture to a separation temperature that is sufficient for condensing at least a portion of the unreacted ammonia and the water vapor to form a dual phase fluid; a separator configured to separate the dual phase fluid and to produce an aqueous ammonia stream and a vapor stream, the vapor stream comprising predominantly of hydrogen and nitrogen, wherein the separation temperature is below 0°C.

In optional embodiments of the apparatus of the invention:
- the apparatus can also include an ammonia cracker in fluid communication with a source of ammonia, wherein the ammonia cracker is configured to crack an ammonia feed, in the presence of at least 0.15% water vapor, to produce the gas mixture;
- the ammonia feed comprises at least 0.15% water prior to entering the ammonia cracker; and/or
- the water vapor is directly mixed with the ammonia feed within the ammonia cracker.

In another embodiment, the apparatus may include: an ammonia cracker in fluid communication with an ammonia source, wherein the ammonia cracker is configured to crack a gaseous ammonia feed, in the presence of at least 0.15% water vapor, to produce a cracked gas stream comprising hydrogen, nitrogen, unreacted ammonia, and water vapor; a first cooler configured to pre-cool the cracked gas stream from a feed temperature to a pre-cooling temperature that is sufficient for condensing at least a portion of the unreacted ammonia and the water vapor to form a first dual phase fluid; a first separator configured to separate the first dual phase fluid and to produce an aqueous ammonia stream and a vapor stream; a second cooler configured to cool the vapor stream to a separation temperature that is sufficient for condensing at least a portion of the unreacted ammonia and the water vapor to form a second dual phase fluid; and an ammonia separator configured to separate the second dual phase fluid to produce a waste stream and a fluid stream, wherein the fluid stream comprises predominately of hydrogen and nitrogen, wherein the waste stream comprises ammonia and water, wherein the pre-cooling temperature is above 0°C and the separation temperature is below 0°C.

In optional embodiments of the apparatus of the invention:
- the apparatus can also include means for sending the aqueous ammonia stream to the ammonia cracker for use as fuel to provide heat used cracking the ammonia feed;
- the apparatus can also include means for combining the waste stream with the gaseous ammonia feed;
- the apparatus can also include means for sending the fluid stream from the ammonia separator to a hydrogen separation unit to form a hydrogen stream and a nitrogen enriched stream;
- the hydrogen separation unit comprises a pressure swing adsorption unit;
- the hydrogen separation unit comprises a temperature swing adsorption unit;
- the hydrogen separation unit comprises a cryogenic partial condensation unit that is configured to operate at a temperature below a boiling point of nitrogen, such that the nitrogen is separated from the hydrogen via condensation;
- the apparatus can also include a liquid ammonia storage tank, wherein the liquid ammonia storage tank is in fluid communication with an ammonia heater that is configured to warm a liquid ammonia feed stream to produce the gaseous ammonia feed;
- the first cooler and/or second cooler use refrigeration from a stream selected from the group consisting of the liquid ammonia feed stream, the fluid stream, a stream derived from the fluid stream, a refrigerant, and combinations thereof;
- the separation temperature is between -40°C and -100°C;
- the apparatus can also include means for maintaining the pressure of the cracked gas stream between 10 and 50 bar(a);
- the apparatus can also include means for maintaining the pressure of the cracked gas stream between 25 and 35 bar(a);
- the feed temperature of the first cooler is between ambient and 150°C; and/or
- the first cooler is a cooling unit selected from the group consisting of a water cooler, an atmospheric cooler, or refrigerant cooler.

### Brief Description of the Drawings

These and other features, aspects, and advantages of the present invention will become better understood with regard to the following description, claims, and accompanying drawings. It is to be noted, however, that the drawings illustrate only several embodiments of the invention and are therefore not to be considered limiting of the invention's scope as it can admit to other equally effective embodiments.
FIG. 1 shows a simplified process flow chart in accordance with an embodiment of the prior art.
FIG. 2 provides a second embodiment of the present invention.
FIG. 3 shows a phase diagram of water and ammonia at atmospheric pressure.

### Detailed Description

While the invention will be described in connection with several embodiments, it will be understood that it is not intended to limit the invention to those embodiments. On the contrary, it is intended to cover all the alternatives, modifications and equivalence as may be included within the spirit and scope of the invention defined by the appended claims.

In reference to the Figures, unless otherwise noted, dotted and dashed lines between two pieces of equipment are meant to indicate that the equipment is, at a minimum, thermally integrated.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In certain embodiments, the present method relates to a means for producing hydrogen from ammonia, comprising for example a catalytic cracking method of ammonia to obtain a mixture comprising mainly hydrogen and nitrogen as well as unconverted ammonia and water, a mixture purification system in particular to remove ammonia and water and a method of nitrogen-hydrogen separation by pressure swing adsorption or cryogenic partial condensation.

The term "about 30 bar pressure" means as close to 30 bar pressure as is reasonable given the conditions. As used herein, "about 30 bar pressure" is defined as meaning 30 bar plus or minus 5%, 10% or even 20%. Other instances of the preposition "about" should be interpreted in a similar fashion.

As used herein, the term "ambient temperature" is defined as the temperature of the surrounding air. Ambient temperature may be defined as between 0°C and 38°C. Ambient temperature may be defined as between 10°C and 27°C. Ambient temperature may be defined as between 18°C and 25°C.

As used herein, the term "cryogenic" is defined in its normal meaning as concerning any liquid at a temperature below -73°C, preferably below -120°C, more preferably below -180°C.

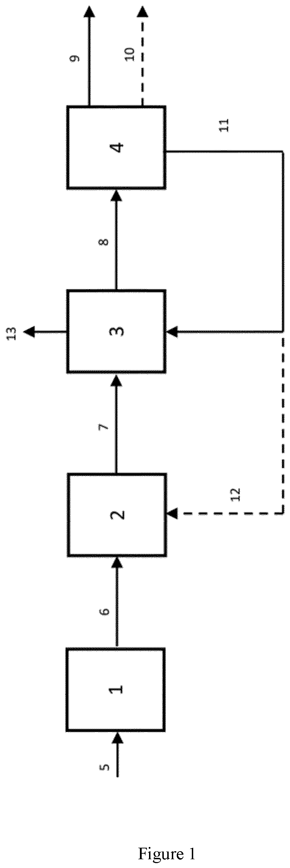

Figure 1 represents a block diagram of the overall process. Liquid ammonia feed 5 is coming from a liquid ammonia storage (not shown). To avoid stress corrosion cracking of carbon steel, at least 0.2% of water can be added before transportation and/or storage. Liquid ammonia feed 5, which may be at a temperature of around -33°C, is fed to section 1 where it is pumped, evaporated under pressure (typically between 20 and 40 bar abs) and superheated to a temperature above ambient to form fluid stream 6. Such a process could also be connected to a high-pressure gaseous ammonia pipeline. In that case, section 1 may not be necessary.

Fluid stream 6 is introduced in section 2 where it is preheated, cracked at high temperature (typically between 500°C and 800°C) in the presence of a catalyst in order to convert NH₃ into H₂ and N₂ following the reaction: 2 NH₃ → 3 H₂ + N₂. The mixture, which contains N₂, H₂, unconverted NH₃ (typically between 0.3% and 3% of feed) and some water, is then cooled in section 2 to form fluid 7. Fluid 7 is introduced in section 3 where ammonia and water are removed from the mixture. Part or all of this purification could be done by adsorption. Waste stream 13 and fluid stream 8 exit section 3.

Fluid 8, which comprises primarily N₂ and H₂, enters section 4 where N₂ and H₂ will be separated and purified by pressure swing adsorption or partial condensation at a cryogenic temperature. N₂ stream 9, and H₂ stream 10, and possibly stream 11 exit section 4. Recycle stream 11 may be reintroduced into section 3, or a portion (stream 12) may be introduced into section 2.

The primary focus of the present disclosure is related to section 3 of the overall process, and therefore, the object of certain embodiments of the invention is to improve the ammonia and water removal system.

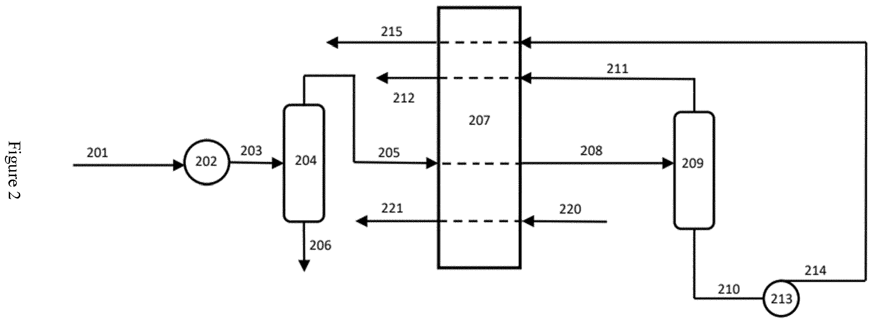

Turning to Figure 2, one embodiment of the present invention is presented. Feed stream 201 is introduced into cooler 202. Cooler 202 may be an atmospheric cooler or water cooler using water coming from an atmospheric tower (i.e. at a temperature close to ambient). In this case, a typical temperature of this stream could be 25°C. Cooler 202 may also be a water cooler using water from a refrigeration unit (i.e. at a temperature colder than ambient). In that case, a typical temperature of this stream could be 10°C. Cooler 202 may also vaporize a refrigerant such as ammonia or R1234yf. Cooler 202 may also partially use the cold generated by the heating of liquid ammonia in section 1 of Figure 1.

Feed stream 201, which is preferably sourced from an ammonia cracking unit (e.g., Section 2 of FIG. 1), contains primarily hydrogen and nitrogen, as well as unconverted ammonia and water vapor. Feed stream 201 may contain approximately 72 to 75 mol% of hydrogen and 24 to 25% of nitrogen corresponding to the above-mentioned reaction stoichiometry. Feed stream 201 may also contain unreacted ammonia (0.3 to 3 mol%) and water (0.1 to 1 mol%) Feed stream 201 may be at a temperature between 150°C and ambient temperature. Feed stream 201 may be at between 10 and 50 bar abs, preferably between 20 and 40 bar abs.

After passing though cooler 202, resulting cold feed stream 203 is two-phase. The purpose of this first cooler is to provide a water-enriched stream in order to deconcentrate water, particularly for embodiments in which ammonia is recycled upstream of the ammonia cracking unit. In embodiments that use ammonia as fuel, this cooler may not be necessary. Cold feed stream 203 is separated in separator 204 thereby producing an aqueous ammonia-enriched stream 206 and a water and ammonia depleted vapor stream 205.

Aqueous ammonia-enriched stream 206 may be heated, vaporized, or used as fuel for the ammonia cracking unit. Water and ammonia depleted vapor stream 205 is then further cooled in heat exchanger 207 at a temperature below the freezing point of pure water (i.e., below 0°C), preferably below -40°C, more preferably at a temperature around -77°C (i.e., close to the freezing point of pure ammonia) to produce two-phase stream 208. Stream 208 is separated in separator 209 that is configured to produce a concentrated ammonia liquid stream 210 and a hydrogen and nitrogen enriched vapor stream 211.

Concentrated ammonia liquid stream 210 can be pumped at a higher pressure in pump 213 and warmed in heat exchanger 207 in order to be recycled upstream of the ammonia cracking unit. The pump may not be not necessary if separator 209 is at high elevation and/or if stream 210 is recycled to an ammonia storage tank.

Hydrogen and nitrogen enriched vapor stream 211 can be warmed in heat exchanger 207. An auxiliary fluid 220 coming from a refrigeration cycle (not shown) can be used to provide additional cold for the partial condensation of the feed stream 205. The refrigeration cycle may be a reverse Brayton cycle (e.g., using air or nitrogen rich gas expansion) or a reverse Rankine cycle using a pure refrigerant such as ethane or a mixed refrigerant. More than one auxiliary fluid may be used. In that case, part of the additional cold may be provided by the heating of liquid ammonia in section 1 of Figure 1.

Heat exchanger 207 is represented as a single multistream heat exchanger (e.g., a stainless steel plate heat exchanger); however, those of ordinary skill in the art will recognize that it could be several two stream heat exchangers in parallel (e.g., shell and tube heat exchangers), each cooling a fraction of feed stream 205 versus concentrated ammonia liquid stream 214 or hydrogen and nitrogen enriched vapor stream 211 or an auxiliary fluid or other fluids.

In case the downstream unit to separate hydrogen from nitrogen is a pressure swing adsorption unit, hydrogen and nitrogen enriched vapor stream 212 may be directly fed to this unit as almost all the water has been removed and around 90% of the ammonia.

In case the downstream unit to separate hydrogen from nitrogen is a cryogenic partial condensation, cold hydrogen and nitrogen enriched vapor stream 211 may be first purified by temperature swing adsorption to remove residual ammonia and water and the further cooled to partially condensate a nitrogen enriched liquid fraction. Alternately, warm hydrogen and nitrogen enriched vapor stream 212 may be first purified at a temperature close to ambient by temperature swing adsorption to remove residual ammonia and water before being cooled to partially condensate a nitrogen enriched liquid fraction. directly fed to this unit as almost all the water has been removed and around 90% of the ammonia

Table I provides a typical fluid list of such a unit:

**Table I**

| **Fluid** | **201** | **203** | **205** | **206** | **208** |
|---|---|---|---|---|---|
| **Mole Frac (H2O)** | 0.003000 | 0.003000 | 0.000961 | 0.771272 | 0.000961 |
| **Mole Frac (Nitrogen)** | 0.241750 | 0.241750 | 0.242391 | 0.000012 | 0.242391 |
| **Mole Frac (Hydrogen)** | 0.725250 | 0.725250 | 0.727175 | 0.000001 | 0.727175 |
| **Mole Frac (Ammonia)** | 0.030000 | 0.030000 | 0.029473 | 0.228715 | 0.029473 |
| **Molar Flow [Nm3/h*]** | 100000 | 100000 | 99735 | 265 | 99735 |
| **Mass Flow [kg/h]** | 39258 | 39258 | 39048 | 210 | 39048 |
| **Pressure [bar]** | 25.00 | 24.90 | 24.90 | 24.90 | 24.80 |
| **Temperature [C]** | 50.00 | 25.00 | 25.00 | 25.00 | -75.00 |
| **Liquid Fraction** | 0.0000 | 0.0026 | 0.0000 | 1.0000 | 0.0271 |
| | | | | | |

| **Fluid** | 210 | 211 | 212 | 214 | 215 |
|---|---|---|---|---|---|
| **Mole Frac (H2O)** | 0.035473 | 0.000000 | 0.000000 | 0.035473 | 0.035473 |
| **Mole Frac (Nitrogen)** | 0.000045 | 0.249142 | 0.249142 | 0.000045 | 0.000045 |
| **Mole Frac (Hydrogen)** | 0.000012 | 0.747429 | 0.747429 | 0.000012 | 0.000012 |
| **Mole Frac (Ammonia)** | 0.964470 | 0.003429 | 0.003429 | 0.964470 | 0.964470 |
| **Molar Flow [Nm3/h*]** | 2703 | 97033 | 97033 | 2703 | 2703 |
| **Mass Flow [kg/h]** | 2058 | 36990 | 36990 | 2058 | 2058 |
| **Pressure [bar]** | 24.80 | 24.80 | 24.70 | 30.00 | 29.90 |
| **Temperature [C]** | -75.00 | -75.00 | 22.00 | -74.92 | 22.00 |
| **Liquid Fraction** | 1.0000 | 0.0000 | 0.0000 | 1.0000 | 1.0000 |

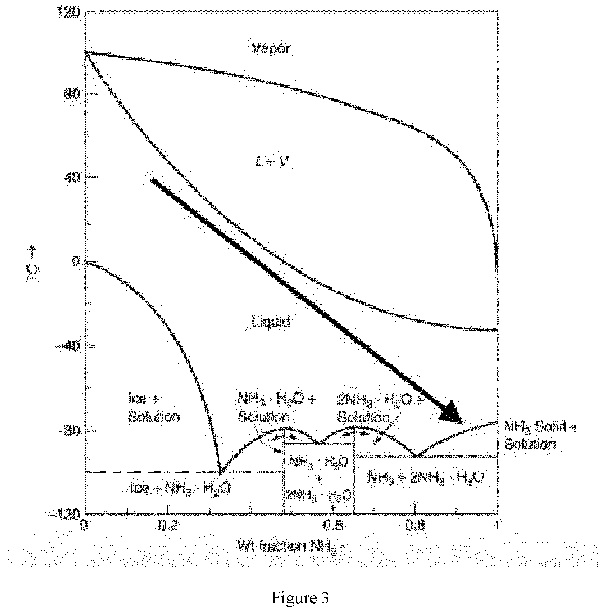

Figure 3 shows the phase diagram of water and ammonia at atmospheric pressure. In certain embodiments, the partial pressure of ammonia and water can be around atmospheric pressure (e.g., slightly lower). The downward sloping black arrow present in FIG. 3 shows an acceptable path in order to remain liquid and to avoid any solid formation. FIG. 3 also shows that it is necessary to have a minimum of unconverted ammonia to avoid freezing of water. In short, small amounts of ammonia within the water phase allow for liquid water to remain in the liquid phase at temperatures well below 0°C. From this phase diagram, for certain concentrations of ammonia and water in the feed stream, it is even possible to cool the mixture to temperature below the freezing point of pure ammonia (i.e. between -77°C and -100°C).

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations that fall within the spirit and broad scope of the appended claims. The present invention may suitably comprise, consist or consist essentially of the elements disclosed and may be practiced in the absence of an element not disclosed. Furthermore, language referring to order, such as first and second, should be understood in an exemplary sense and not in a limiting sense. For example, it can be recognized by those skilled in the art that certain steps or devices can be combined into a single step/device.

The singular forms "a", "an", and "the" include plural referents, unless the context clearly dictates otherwise. The terms about/approximately a particular value include that particular value plus or minus 10%, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A method for producing hydrogen using a feed stream comprising ammonia, the method comprising the steps of:
(a) cracking a gaseous ammonia feed comprising ammonia and at least 0.15% water vapor in an ammonia cracker to produce a cracked gas stream comprising hydrogen, nitrogen, unreacted ammonia, and water vapor;
(b) cooling the cracked gas stream to a separation temperature that is sufficient for condensing at least a portion of the unreacted ammonia and the water vapor to form a dual phase fluid;
(c) separating the dual phase fluid in a separator that is configured to produce an aqueous ammonia stream and a vapor stream, the vapor stream comprising predominantly of hydrogen and nitrogen;
wherein the separation temperature is below 0°C, preferably between -40°C and -100°C.

2. A method for producing hydrogen using a feed stream comprising ammonia, the method comprising the steps of:
(a) pre-cooling a cracked gas stream, which is comprised of hydrogen, nitrogen, unreacted ammonia, and water vapor, to a pre-cooling temperature that is sufficient for condensing at least a portion of the unreacted ammonia and the water vapor to form a first dual phase fluid;
(b) separating the first dual phase fluid in a first separator that is configured to produce an aqueous ammonia stream and a vapor stream;
(c) cooling the vapor stream to a separation temperature that is sufficient for condensing at least a portion of the unreacted ammonia and the water vapor to form a second dual phase fluid; and
(d) separating the second dual phase fluid in an ammonia separator to produce a waste stream and a fluid stream, wherein the fluid stream comprises predominately of hydrogen and nitrogen, wherein the waste stream comprises ammonia and water,
wherein the pre-cooling temperature is above 0°C and the separation temperature is below 0°C, more preferably between -40°C and -100°C.

3. The method as claimed in Claim 2, further comprising the step of cracking a gaseous ammonia feed comprising ammonia and at least 0.15% water vapor in an ammonia cracker to produce the cracked gas stream.

4. The method as claimed in Claim 3, further comprising the step of using the aqueous ammonia stream as fuel to provide heat used in the step of cracking the gaseous ammonia feed.

5. The method as claimed in Claim 3, further comprising the step of combining the waste stream with the gaseous ammonia feed.

6. The method as claimed in one of the previous claims, further comprising sending the fluid stream from step (d) to a hydrogen separation unit to form a hydrogen stream and a nitrogen enriched stream.

7. The method as claimed in Claim 6, wherein the hydrogen separation unit comprises a pressure swing adsorption unit or a temperature swing adsorption unit.

8. The method as claimed in Claim 6 or claim 7, wherein the hydrogen separation unit comprises a cryogenic partial condensation unit that is configured to operate at a temperature below a boiling point of nitrogen, such that the nitrogen is separated from the hydrogen via condensation.

9. The method as claimed in one of the previous claims, further comprising warming a liquid ammonia feed stream to produce the gaseous ammonia feed, wherein the pre-cooling and/or cooling steps use refrigeration from a stream selected from the group consisting of the liquid ammonia feed stream, the fluid stream, a stream derived from the fluid stream, a refrigerant, and combinations thereof.

10. The method as claimed in one of the previous claims, wherein the pressure of the cracked gas stream is between 10 and 50 bar(a), more preferably between 25 and 35 bar(a).

11. The method as claimed in one of the previous claims, further comprising the step of determining the water vapor and/or unreacted ammonia content of the cracked gas stream and adjusting the ammonia content to ensure the cracked gas feed will not freeze during step (c).

12. A method for separating ammonia and water from a gas mixture derived from an ammonia cracking unit, the method comprising the steps of:
providing the gas mixture, wherein the gas mixture comprises hydrogen, nitrogen, unreacted ammonia, and water vapor;
removing heat from the gas mixture such that the gas mixture is partially condensed to form a two-phase stream;
separating the two-phase stream to produce a liquid phase and a gaseous phase, wherein the liquid phase is enriched with ammonia and water, wherein the gaseous phase is enriched in hydrogen and nitrogen,
wherein the two-phase stream is at a temperature below 0°C, preferably below -40°C, more preferably at a temperature around -77°C.

13. The method as claimed in Claim 12, wherein the step of removing heat from the gas mixture is done in the following two steps:
at a first temperature above 0°C to produce a first ammonia and water enriched liquid fraction and a first ammonia and water depleted gaseous fraction; and
at a second temperature below 0°C.

14. An apparatus for producing hydrogen using a feed stream comprising ammonia, the apparatus comprising:
(a) an ammonia cracker in fluid communication with an ammonia source, wherein the ammonia cracker is configured to crack a gaseous ammonia feed, in the presence of at least 0.15% water vapor, to produce a cracked gas stream comprising hydrogen, nitrogen, unreacted ammonia, and water vapor;
(b) a first cooler configured to pre-cool the cracked gas stream from a feed temperature to a pre-cooling temperature that is sufficient for condensing at least a portion of the unreacted ammonia and the water vapor to form a first dual phase fluid;
(c) a first separator configured to separate the first dual phase fluid and to produce an aqueous ammonia stream and a vapor stream;
(d) a second cooler configured to cool the vapor stream to a separation temperature that is sufficient for condensing at least a portion of the unreacted ammonia and the water vapor to form a second dual phase fluid; and
(e) an ammonia separator configured to separate the second dual phase fluid to produce a waste stream and a fluid stream, wherein the fluid stream comprises predominately of hydrogen and nitrogen, wherein the waste stream comprises ammonia and water,
wherein the pre-cooling temperature is above 0°C and the separation temperature is below 0°C, more preferably between -40°C and -100°C.
